(19) Europäisches Patentamt
European Patent Office
Office européen des brevets

(11) Veröffentlichungsnummer: **0 167 488**
**B1**

(12) **EUROPÄISCHE PATENTSCHRIFT**

(45) Veröffentlichungstag der Patentschrift: **25.07.90**

(21) Anmeldenummer: **85810285.8**

(22) Anmeldetag: **20.06.85**

(51) Int. Cl.$^5$: **C 08 B 11/14**, C 08 B 31/00, C 08 B 37/00, B 01 D 15/08

# (54) Ionisch modifizierte Polysaccharide, Verfahren zu deren Herstellung und deren Verwendung.

(30) Priorität: **06.07.84 CH 3287/84**

(43) Veröffentlichungstag der Anmeldung:
**08.01.86 Patentblatt 86/02**

(45) Bekanntmachung des Hinweises auf die Patenterteilung:
**25.07.90 Patentblatt 90/30**

(84) Benannte Vertragsstaaten:
**BE CH DE FR GB IT LI NL SE**

(56) Entgegenhaltungen:
**FR-A-1 365 831**
**FR-A-2 349 603**
**FR-A-2 403 098**
**GB-A- 733 100**
**US-A-4 451 613**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG**
**Klybeckstrasse 141**
**CH-4002 Basel (CH)**

(72) Erfinder: **Merz, Jürg, Dr.**
**Langgartenstrasse 51**
**CH-4105 Biel-Benken (CH)**

**EP 0 167 488 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft auf chemischem Wege ionisch modifizierte, d.h. kationisch, amphoter oder anionisch modifizierte Polysaccharide.

Aus den deutschen Offenlegungsschriften 2 650 988, 2 727 755 und 2 925 689 sind auf chemischem Wege ionisch modifizierte, z.B. kationische, amphotere oder anionische Cellulosematerialien bekannt, die in der Abwassereinigung, insbesondere zum Entfernen von Farbstoffen Verwendung finden. Die bekannten ionisch modifizierten Cellulosematerialien stellen Polysaccharide dar, die β-glycosidisch verknüpft sind.

Es wurde nun gefunden, dass an sich neue, α-glycosidisch verknüpfte, ionisch modifizierte Polysaccharide vorteilhafte, unerwartete Eigenschaften aufweisen, die ihre Anwendung u.a. als stationäre Phase in der chromatographischen Trennung von ionische geladenen Substanzgemischen ermöglichen.

Gegenstand der vorliegenden Erfindung sind daher chemisch modifizierte Polysaccharide, erhältlich aus vernetztem Dextrin, gegebenenfalls vernetztem Dextran oder gegebenenfalls vernetzter Agarose, die dadurch gekennzeichnet sind, dass sie α-glykosidische Verknüpfungen und über die Gruppierung der Formel

(1) $$—CO—NH—CH_2—O—$$

an den Polysaccharidbestandteil gebundene, ionische Bestandteile aufweisen, wobei die Carbonylgruppe mit dem ionischen Bestandteil und das Sauerstoffatom mit dem Polysaccharidbestandteil verbunden sind.

Das Herstellungsverfahren für die ionisch modifizierten Polysaccharide, dessen Verwendung zum Trennen von Substanzgemischen und chromatographische Trennverfahren, bei welchen dieses Material engesetzt wird, bilden weitere Gegenstände der vorliegenden Erfindung.

Als Vertreter von α-glycosidisch verknüpften Polysacchariden kommen vor allem Stärke und ihre Abkömmlinge wie z.B. Dextran und die Dextrine, insbesondere Weissdextrin, in Betracht. Auch nicht ausschliesslich α-glycosidisch verknüpfte Polysaccaride kommen in Frage, wie z.B. Agarose, die aus abwechselnden Einheiten von β-1,3-verknüpfter D-Galaktopyranose und α-1,4-verknüpfter 3,6-Anhydro-L-galaktopyranose besteht. Gegebenfalls können die erfindungsgemässen Polysaccharide ganz oder teilweise vernetzt sein. Unvernetzte Dextrine, gegebenenfalls vernetztes Dextran oder gegebenenfalls vernetzte Agarose, die ionisch modifiziert sind und α-glykosidische Verknüpfungen aufweisen, stehen im Vordergrund des Interesses.

Die ionischen Bestandsteile (Substituenten) in den erfindungsgemässen modifizierten Polysacchariden, welche über die Carbonylgruppe der Gruppierung der Formel (1) mit dem Polysaccharid verknüpft sind, liegen als anionische, vorzugsweise amphotere und insbesondere kationische Bestandteile vor.

Solche Bestandteile, sofern sie kationisch sind, enthalten basische Substituenten, wie z.B. quaternäre Guanidinium-, Immonium- oder vor allem Ammoniumgruppen. Von besonderem Interesse sind kationische Bestandteile, die vorzugsweise substituierte Ammoniumgruppen enthalten, wobei in der Regel zwei solche Ammoniumgruppen vorhanden sind oder vor allem eine solche Ammoniumgruppe vorhanden ist.

Als N-Substituenten kommen aliphatische, cycloaliphatische, aromatische und araliphatische Gruppen in Frage, die gegebenenfalls zusammen mit den Stickstoff- und gegebenenfalls weiteren Heteroatomen vorzugsweise 5-gliedrige, vor allem 6-gliedrige Ringe bilden können. Vor allem geradkettige oder verzweigte Niederalkylreste kommen als N-Substituenten in Betracht, wobei solche Niederalkylreste gegebenenfalls durch Hydroxyl, Nitril, Halogen oder Niederalkoxy substituiert sind.

Die basischen Reste bevorzugter, kationischer Bestandteile der erfindungsgemässen, modifizierten Polysaccharide entsprechen somit z.B. der Formel

(2) 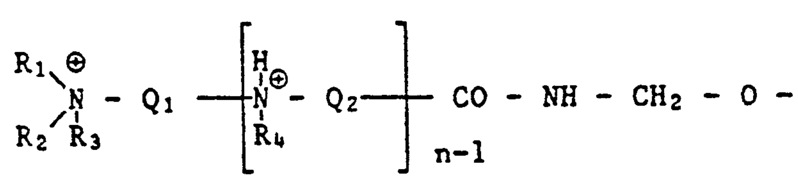 ,

worin n 1 oder 2, $R_1$, $R_2$, $R_3$ und $R_4$ unabhängig voneinander je Wasserstoff, unsubstituiertes oder durch Hydroxyl, Nitril, Halogen oder $C_1$—$C_4$-Alkoxy substituiertes, geradkettiges oder verzweigtes $C_1$—$C_4$-Alkyl, unsubstituiertes oder durch $C_1$—$C_4$-Alkyl substituiertes Cycloalkyl, unsubstituiertes oder durch Nitro oder Halogen substituiertes Benzyl oder Phenyl, oder $R_1$ und $R_2$ zusammen mit dem sie verbindenden Stickstoffatom und gegebenenfalls weiterin Heteroatom einen 5- oder 6-gliedrigen, heterocyclischen Ring oder $R_3$ und $R_4$ zusammen mit der sie verbindenden Grupppierung

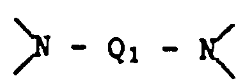

und gegebenenfalls weiteren Heteroatomen auch einen 5- oder 6-gliedrigen Ring und $Q_1$ und $Q_2$ unabhängig voneinander je Alkylen mit 1 bis 8 Kohlenstoffatomen bedeuten.

Bevorzugte aliphatische N-Substituenten sind gegebenenfalls verzweigte Niederalkylreste, die gegebenenfalls durch Nitril, vor allem Hydroxy oder Chlor als Halogen substituiert sind. Als cycloaliphatische N-Substituenten kommen z.B. Cyclopentyl und vor allem Cyclohexyl in Betracht, die gegebenenfalls mit Niederalkyl substituiert sind. Durch Halogen, z.B. durch Chlor substituiertes oder vor allem unsubstituiertes Benzyl oder Phenyl sind als araliphatische und aromatische N-Substituenten bevorzugt. Bei den heteterocyclischen Ringen, die zusammen mit dem Stickstoffatom einer Ammoniumgruppe oder den zwei Stickstoffatomen von zwei Ammoniumgruppen und gegebenenfalls weiteren Heteroatomen, insbesondere weiteren Stickstoff- und/oder Sauerstoffatomen gebildet werden können, handelt es sich vorzugsweise um z.B. Pyrrolidinium- Piperidinium-, Morpholinium- Imidazolinium-, Benzimidazolinium-, vor allem Piperazinium- und insbesondere Triaziniumringe, welche gegebenenfalls durch Halogen, z.B. Chlor, substituiert sind. Die Ammoniumgruppe ist mit der Carbonylgruppe der Gruppierung der Formel (1) vorzugsweise über eine Isopropylen-, vor allem n-Propylen-, vorzugsweise Aethylengruppe verbunden. Dies gilt auch, falls zwei Ammoniumgruppen vorhanden sind, für das Verbindungsglied zwischen diesen zwei Ammoniumgruppen.

Demgemäss weisen bevorzugte, kationische modifizierte, erfindungsgemässe Polysaccharide basische Reste der Formel

(3) 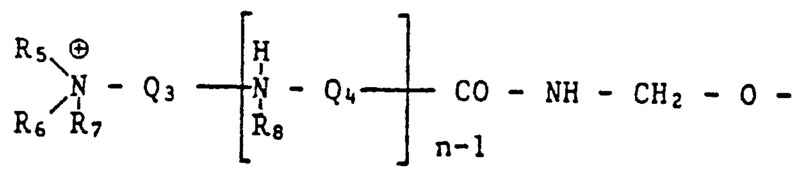 ,

auf, worin n 1 oder 2, $R_5$, $R_6$, $R_7$ und $R_8$ unabhängig voneinander je Wasserstoff, Alkyl, Hydroxyalkyl, Cyanalkyl oder Chloralkyl mit je 1 bis 4 Kohlenstoffatomen, unsubstituiertes oder durch $C_1$—$C_4$-Alkyl substituiertes Cyclopentyl oder Cyclohexyl, unsubstituiertes Benzyl, Chlorbenzyl, unsubstituiertes Phenyl, Nitrophenyl oder Chlorphenyl, oder $R_5$ und $R_6$ zusammen mit dem sie verbindenden Stickstoffatom und gegebenenfalls einem Sauerstoffatom einen Pyrrolidinium-, Piperidinium- oder Morpholiniumring, oder $R_7$ und $R_8$ zusammen mit der sie verbindenden Gruppierung

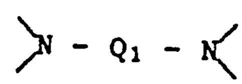

und gegebenenfalls weiteren Heteroatomen einen Imidazolinium- Benzimidazolinium, Piperazinium, Triazinium- oder Mono- oder Dichlortriaziniumring bilden und $Q_3$ und $Q_4$ unabhängig voneinander je Alkylen mit 2 oder 3 Kohlenstoffatomen bedeuten.

Im Vordergrund des Interesses stehen kationisch modifizierte Polysaccharide, deren basische Reste eine einzige Ammoniumgruppe enthält, die an der Carbonylgruppe der Gruppierung der Formel (1) über eine Aethylgruppe verbunden ist und als N-Substituienten zwei unsubstituierte Niederalkylreste oder einen durch Hydroxyl substituierten t-Butylrest aufweisen.

Solche modifizierte Polysaccharide weisen insbesondere basische Reste der Formel

(4) 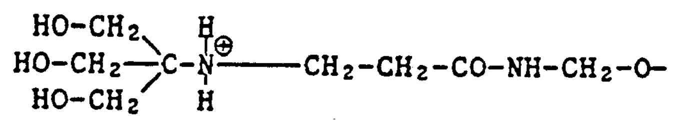

oder

(5) 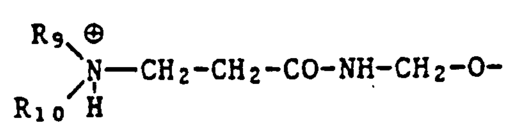

auf, worin $R_9$ und $R_{10}$ voneinander verschieden oder vorzugsweise gleich sind und je Isopropyl, oder insbesondere n-Propyl, Aethyl oder Methyl bedeuten.

Sofern die erfindungsgemässen, ionisch modifizierten Polysaccharide amphotere Bestandteile aufweisen, die an der Carbonylgruppe der Gruppierung der Formel (1) verknüpft sind, so enthalten solche amphotere Bestandteile im allgemeinen zwitterionische, Aminosäuregruppen, beispielsweise Aminoessigsäure- (Glycin-), Iminodiessigsäure-, Methylaminoessigsäure- (Sarkosin-) Methylaminopropionsäure-, Iminodipropionsäure-, Iminoessigsäurepropionsäure-, Asparaginsäure-, Aethanolaminoessigsäure-, Vinylbenzyliminodiessigsäure- oder Aethylendiamine-N,N'-dipropionsäuregruppen.

Diese Aminosäuregruppen, z.B. solche der vorstehend angegebenen Art, sind an der Carbonylgruppe mit der Gruppierung der Formel (1) vorzugsweise über eine alkylsubstituierte, phenylsubstituierte oder

unsubstituierte Alkylen- oder Phenylenkette und gegebenenfalls zusätzlich ein Sauerstoff- oder Stickstoffatom oder eine sekundäre oder alkylsubstituierte tertiäre Aminogruppe verknüpft.

Die zwitterionische Reste bevorzugter amphoterer Bestandteile der erfindungsgemässen, modifizierten Polysaccharide entsprechen somit z.B. der Formel

(6) 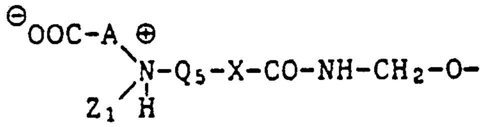 ,

worin X —O—, —S—,

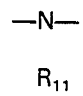

oder die direkte Bindung, $R_{11}$ Wasserstoff oder Alkyl mit 1 bis Kohlenstoffatomen, $Q_5$ einen unsubstituierten oder durch $C_1$—$C_4$-Alkyl oder Phenyl substituierten $C_1$—$C_8$-Alkylen- oder Phenylenrest, $Z_1$ —B—$COO^{\ominus}$, Alkyl mit 1 bis 4 Kohlenstoffatomen oder Wasserstoff und A und B unabhängig voneinander je einen unsubstituierten oder durch $C_1$—$C_4$-Alkyl, $C_1$—$C_4$-Alkoxy oder Phenyl substituierten $C_1$—$C_8$-Alkylenrest bedeuten.

Vorzugsweise stehen X in Formel (6) für die direkte Bindung und $Z_1$ für Niederalkyl, vorzugsweise Methyl oder Aethyl, oder für Wasserstoff. Als bevorzugte Definition von $Q_5$ kommt vor allem unsubstituiertes Niederalkylen in Betracht.

Somit stehen als amphotere modifizierte Polysaccharide solche im Vordergrund des Interesses, die Reste der Formel

(7) 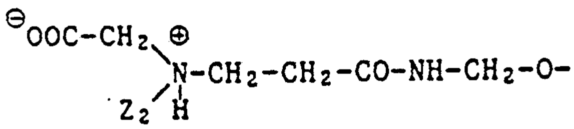

aufweisen, worin $Z_2$ Methyl oder Wasserstoff bedeutet.

Sofern die erfindungsgemässen, modifizierten Polysaccharide anionische Bestandteile aufweisen, die an der Carbonylgruppe der Gruppierung der Formel (1) verknüpft sind, so enthalten solche anionische Bestandteile im allgemeinen einen Carboxylrest oder saure Reste einer mehrbasischen, anorganischen, Sauerstoff enthaltenden Säure, beispielsweise den Reste eines Schwefelsäureesters oder Phosphorsäureesters, einen Phosphonsäure- oder Phosphorsäurerest, einen Phosphorsäurehalbesterrest oder einen Sulfonsäurerest. Solche sauren Reste sind an der Carbonylgruppe der Gruppierung der Formel (1) vorzugsweise über eine alkylsubstituierte oder unsubstituierte Alkylen- oder Phenylenkette in der Regel direkt verknüpft.

Die sauren Reste bevorzugter, anionischer Bestandteile der erfindungsgemässen, modifizierten Polysaccharide entsprechen somit z.B. der Formel

(8) $$^{\ominus}Y_1—Q_5—CO—NH—CH_2—O—,$$

worin $Y_1^{\ominus}$ Carboxyl oder den Säurerest einer mehrbasischen, anorganischen, Sauerstoff enthaltenden Säure bedeutet und $Q_5$ die angegebenen Bedeutungen hat, wobei saure Reste der Formel

(9) $$Y_2^{\ominus}—Q_6—CO—NH—CH_2—O—,$$

worin $Q_6$ Isopropylen, n-Propylen, vorzugsweise Aethylen oder Methylen und

$Y_2^{\ominus}$ $-COO^{\ominus}$, $-SO_3^{\ominus}$ oder 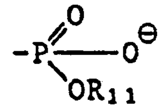

bedeuten und $R_{11}$ die angegebenen Bedutungen hat, im Vordergrund des Interesses stehen.

Die erfindungsgemässen, ionisch modifizierten Polysaccharide weisen in der Regel einen Substitutionsgrad von etwa 0,1 bis etwa 0,8, vorzugsweise 0,2 bis 0,6 auf. Der Substitutionsgrad wird aufgrund der Stickstoffgehalts des modifizierten Polysaccharides bestimmt.

Bei der Herstellung der erfindungsgemässen, ionisch modifizierten Polysaccharide geht man im allgemeinen so vor, dass man ein Polysaccharid der angegebenen Art als Ausgangsmaterial nach an sich

bekannter Weise mit einer N-Methylolamidgruppe aufweisenden Verbindung umsetzt. Hierbei werden als N-Methylolverbindungen z.B. solche der Formel

(10) 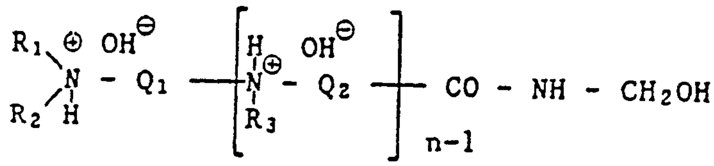 ,

(11) 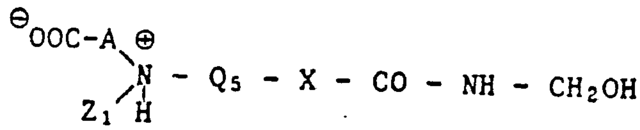

oder

(12) $H^{\oplus}\ {}^{\ominus}Y_1—Q_5—CO—NH—CH_2OH$

eingesetzt, worin A, $Q_1$, $Q_2$, $Q_5$, $R_1$, $R_2$, $R_3$, $R_4$, X, $Y_1^{\ominus}$, $Z_1$ und n die angegebenen Bedeutungen haben.

Die Verbindungen der Formel (10) sind in den deutschen Offenlegungsschriften 2 650 966 und 1 650 999, die Verbindungen der Formel (11) in der deutschen Offenlegungsschrift 2 727 755 und die Verbindungen der Formel (12) in der deutschen Offenlegungsschrift 2 925 689 beschrieben. Die Herstellung der Verbindungen der Formeln (10), (11) und (12) ist ebenfalls in den genannten deutschen Offenlegungsschriften beschrieben.

In einer weiteren Ausführungsform zur Herstellung der erfindungsbemässen, ionisch modifizierten Polysaccharide wird, sofern $Q_2$ in Formel (2), $Q_4$ in Formel (3) und $Q_5$ in Formel (6) jeweils für Aethylen und X in Formel (6) für die direkte Bindung stehen, das Polysaccharid der angegebenen Art zuerst mit Methylolacrylamid als Methylolverbindung (hergestellt aus Acrylamid und Formaldehyd oder einen Formaldehyd abgebenden Mittel, wie z.B. Paraformaldehyd, Hexamethylentetramin oder Trioxan bei höchstens 100°C, vorzugsweise 20 bis 60°C in wässrigem Medium gegebenenfalls in Gegenwart eines basischen Katalysators wie z.B. Natriumhydroxyd, Natriummäthylat oder Magnesiumoxyd) umgesetzt, worauf durch Addition an der Doppelbindung des Zwischenproduktes, welches acrylmodifizierte, an den Polysaccharidbestandteil verbundene, nicht-ionische Bestandteile der Formel

(13) $—O—CH_2—NH—CO—CH = CH_2$

aufweist, einer kationischen Verbindung der Formel

(14) 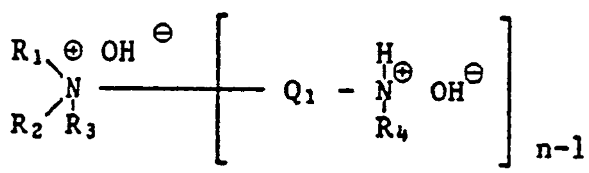 ,

worin n, $R_1$, $R_2$, $R_3$, $R_4$ und $Q_1$ die angegebenen Bedeutungen haben, einer amphoteren Verbindung der Formel

(15) ${}^{\ominus}OOC—A—{}^{\oplus}NH_2—Z_1$,

worin A und $Z_1$ die angegebenen Bedeutungen haben, oder einer anionischen Verbindung der Formel

(16) $Y_1^{\ominus}\ H^{\oplus}$,

worin $Y_1^{\ominus}$ die angegebenen Bedeutungen hat, der ionische Bestandteil eingeführt wird.

Als bevorzugte Vertreter der Formel (14) seien z.B. Aminotriazin, Aminodichlortriazin, Imidazol, Benzimidazol, Piperidin, Chloranilin, Anilin und insbesondere Diäthylamin, Diäthanolamin und Tris-(hydroxymethyl)-aminomethan, als bevorzugte Vertreter der Formel (15) Aminoessigsäure und Sarcosin, und als bevorzugte Vertreter der Formel (16) Natriumpyrosulfit erwähnt.

Bevorzugt wird das Polysaccharid der angegebenen Art mit der Methylolverbindung einer der Formeln (10), (11) oder (12) in wässrigem Medium bei pH 3 bis 6 und 15 bis 25°C während etwa 20 bis 40 Minuten unter Rühren gehalten, dann bei 70 bis 80°C getrocknet und schliesslich einer Wärmebehandlung bei 90 bis 150°C, vorzugsweise 90 bis 100°C, während etwa 1 bis 2 Stunden unterworfen. In einer weiteren, bevorzugten Ausführungsform des Herstellungsverfahrens wird das Cellulosepulver mit Methylolacrylamid als Methylolverbindung in wässrigem Medium bei pH 3 bis 6 und 15 bis 50°C vorzugsweise in Gegenwart eines Polymerisationsinhibitors wie z.B. Hydrochinon während etwa 20 bis 40 Minuten unter

Rühren gehalten, dann bei 70 bis 80°C getrocknet, hierauf einer Wärmebehandlung bei 90 bis 150°C, vorzugsweise 90 bis 100°C, während 1 bis 2 Stunden unterworfen, wobei in einer letzten Stufe der ionische Bestandteil durch Addition an die Doppelbindung des acrylmodifizierten Zwischenproduktes einer Verbindung einer der Formeln (14), (15) oder (16) in wässrigem Medium bei pH 7,0 bis 12,5, vorzugsweise 11,0 bis 12,0 und 15 bis 50°C während etwa 4 bis 6 Stunden eingeführt wird und das ionisch modifizierte Polysaccharid schliesslich bei 70 bis 80°C getrocknet wird. Bei beiden Verfahrensvarianten ist es vorteilhaft, vor der Trocknung bei 70 bis 80°C eine Lagerung des mit der Methylolverbindung imprägnierten Polysaccharids bei 15 bis 25°C während mindestens 24 Stunden (sogenanntes Kaltlagerverfahren) einzuschalten.

Die erfindungsgemässen, ionisch modifizierten Polysaccharide finden Verwendung zum Reinigen von Abwässern, wie dies für ionisch modifizierte Cellulosematerialien z.B. in der deutschen Offenlegungsschrift 2 650 988 beschrieben ist, und insbesondere zum Trennen von Substanzgemischen die mindestens einen Anteil ionischer Komponenten aufweisen. Das an sich bekannte, chromatographische Trennverfahren solcher Substanzgemische zeichnet sich dadurch aus, dass die erfindungsgemässen, ionisch modifizierten Polysaccharide, die ein Ionenaustauschvermögen aufweisen, als stationäre Phase eingesetzt werden.

Vor allem organische Substanzgemische jeglicher Zusammensetzung können in ihre Komponenten aufgetrennt werden, sofern mindestens eine der Komponenten der Substanzgemische kationisch, anionisch oder amphoter geladen ist. Als Beispiele möglicher Substanzgemische seien u.a. technische Gemische von Farbstoffen, Pharmazeutika (Anreichung oder Reinigung von Fermentationsbrühen) und Ligninderivaten erwähnt. Insbesondered Aminosäuregemische, wie sie z.B. in Präparatem von rohem Cephalosporin C-Natriumsalzen vorliegen, können mittels der Ionenaustausch-Chromatographie unter Verwendung der erfindungsgemässen, ionisch modifizierten Polysaccharide als stationäre Phase gereinigt werden.

So beschreibt z.B. W. Voser im Artikel "Isolation of Hydrophobic Fermentation Products by Adsorption Chromatography" in J. Chem. Techn. Biotechnology Band 32, Seiten 109 bis 118 (1982) eine Apparatur und eine Arbeitsweise zur chromatographischen Trennung von Cephalosporin C-Natriumsalzen mit makroporösen Ionenaustauschern, wie z.B. AMBERLIT® XAD, die für die chromatographische Trennung von Cephalosporin C-Natriumsalzen mit der erfindungsgemässen ionisch modifizierten Polysacchariden auch angewendet werden können.

Als Verwendung der erfindungsgemässen, ionisch modifizierten Polysaccharide, die im Vordergrund des Interesses steht, sei die chromatographische Trennung von Ligninaminen oder von Ligninsulfonaten erwähnt, die in Schwarzlaugen des Holzaufschlusses für die Papierherstellung (Kraftprozess) oder in Sulfitablaugen des Holzaufschlusses (Sulfitprozess) enthalten sind. Durch die Isolierung der Komponenten der Ligninamin- oder Ligninsulfonatgemische können nämlich u.a. wertvolle Dispergatoren und Produkte auf Polysaccharidbasis gewonnen werden. Solche Ligninsulfonatgemische sind im Handel unter den Markennamen wie z.B. ATTISOL® I und II, MARASPERSE®, DYNASPERSE®, LIGNOSOL® D 10, BORRESPERSE® N, POLYFON® O und H und REAX® 80L, 81A, 82, 83A, 85A und 88B erhältlich. Handelsübliche Ligninamingemische sind z.B. unter dem Markennamen INDULIN® W1 und MOK ebenfalls erhältlich.

Der wesentlichste Vorteil der erfindungsgemässen, ionisch modifizierten Polysaccharide besteht darin, dass sie dank ihrer guten Trenneigenschaften und ihrem guten Fliesverhalten als stationäre Phase in chromatographischen Trennverfahren einwandfrei einsetzbar sind, wobei unter Verwendung von sowohl alkalischen als auch sauren Elutionsmitteln der ganze pH-Bereich von pH etwa 1 bis etwa 14 ausgenützt werden kann.

In der nachstehenden Herstellungsvorschrift und in den nachstehenden Beispielen beziehen sich die angegebenen Teile und Prozente auf das Gewicht.

## Herstellungsvorschriften

Vorschrift A:

264,6 Teile Diäthylamin (3,6 Mol) werden mit 0,9 Teilen einer 30 %igen, wässrigen Natriumhydroxydlösung auf 35°C aufgeheizt. Zur Diäthylaminlösung wird eine Lösung von 256 Teilen Acrylamid (3,6 Mol) und 0,025 Teilen Hydrochinon in 270 Teilen Wasser innerhalb von 4 Stunden gegeben, wobei das Reaktionsgemisch durch Kühlen bei 40°C gehalten wird. Nach beendeter Acrylamidzugabe wird das Reaktionsgemisch auf 55°C aufgeheizt, während 15 Stunden bei dieser Temperatur gehalten, anschliessend auf 20°C bekühlt und mit 30 Teilen einer 37 %igen, wässrigen, Salzsäurelösung auf den pH-Wert von 9,4 eingestellt. Zum Reaktionsgemisch werden hierauf 352 Teile einer 37 %igen, wässrigen Formaldehydlösung (4,34 Mol) gegeben. Das Reaktionsgemisch wird während 24 Stunden bei 20°C gehalten. Man erhält 1173,5 Teile einer 50 %igen, wässrigen, leicht viskosen, bräunlichen Lösung des Umsetzungsproduktes der Formel

(17) 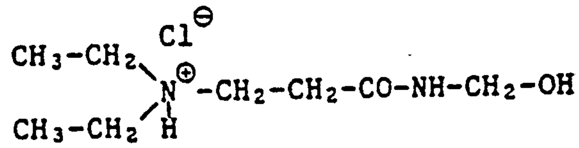 .

Vorschrift B:

391,4 Teile (1,9 Mol) Natriumpyrosulfit werden in 500 ml Wasser gelöst und auf 35°C aufgeheizt. Zu dieser Lösung werden 256 Teile Acrylamid (3,6 Mol) und 0,025 Teile Hydrochinon in 270 Teilen Wasser innerhalb von 4 Stunden gegeben, wobei der pH der Reaktionslösung durch Zusatz einer 30 %igen, wässrigen Natriumhydroxydlösung auf 12,0 und die Temperatur der Reaktionslösung durch Kühlen auf 40°C gehalten wird.

Nach beendeter Acrylamidzugabe wird das Reaktionsgemisch auf 55°C aufgeheizt, während 15 Stunden bei dieser Temperatur gehalten, anschliessend auf 20°C gekühlt und mit einer 37 %igen, wässrigen Salzsäurelösung auf einen pH-Wert von 9,5 eingestellt. Zum Reaktionsgemisch werden hierauf 130 Teile Paraformaldehyd (4,33 Mol) gegeben. Anschliessend wird das Reaktionsgemisch unter Rühren während 24 Stunden bei 20°C gehalten. Man erhält 1540 Teile einer 50 %igen, wässrigen, leicht gelblichen, viskosen Lösung des Umsetzungsproduktes der Formel

(18) $$Na^{\oplus}SO^{\ominus}_3—CH_2—CH_2—CO—NH—CH_2—OH$$

Vorschrift C:

Man verfährt wie in Vorschrift A angegeben, setzt jedoch 378 Teile Diaethanolamin (3,6 Mol) (an Stelle von 264,6 Teilen Diäthylamin) ein. Man erhält 1280 Teile einer 50 %igen, wässrigen, leicht viskosen bräunlichen Lösung des Umsetzungsproduktes der Formel

(19) 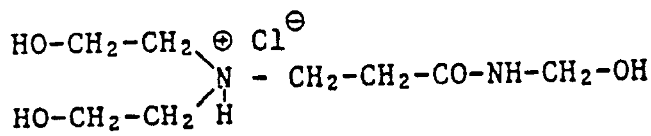

Herstellungsbeispiele

Beispiel 1: 50 Teile eines handelsüblichen, vernetzten Dextrans (SEPHADEX® G 50) werden mit 250 Teilen der 50 %igen, wässrigen Lösung des Umsetzungsproduktes gemäss Vorschrift A, welche vorgängig mit einer wässrigen 1 N Salzsäurelösung auf den pH-Wert von 3,5 eingestellt worden ist, aufgeschlämmt. Diese Anschlämmung wird während 30 Minuten bei 20°C unter Rühren gehalten und dann abfiltriert.

Das so imprägnierte Polysaccharidpulver wird unter vermindertem Druck bei 70°C getrocknet. Anschliessend wird die Kondensation des Umsetzungsproduktes mit den Hydroxylgruppen des Polysaccharides während 75 Minuten bei 100°C durchgeführt. Das so behandelte Polysaccharidpulver wird mit entionisiertem Wasser neutral gewaschen, bei 70°C unter vermindertem Druck getrocknet und fein gemahlen (Korngrösse 50—150 µm). Man erhält 50 Teile eines weissen pulverförmigen, kristallinen, kationisch modifizierten Polysaccharids, das einen Substitutionsgrad von 0,60, ein Ionenaustauschvermögen von 2,9 meq/g, ein Schüttvolumen von 2,3 ml/g, eine Quellung in Wasser von 435 g/l und sehr gute Durchflusseigenschaften aufweist und modifizierte Saccharideinheiten der Formel

(20) 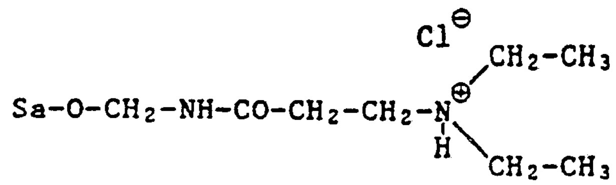

enthält, worin Sa für einen Saccharidrest steht.

Die Bestimmungsmethoden des Ionenaustauschvermögens ist z.B. auf Seite 253 der Monographie "Cellulosic Ion Exchangers" von E. A. Peterson (Aufl. 1980, Elsevier) beschrieben.

Das Schüttvolumen wird folgendermassen bestimmt: Ein Messzylinder von 10 ml Inhalt wird mit dem jeweiligen Material unter 10 maligem Klopfen gefüllt, anschliessend wird das Gewicht bestimmt und auf ein Liter umgerechnet.

Die Bestimmung der Quellung wird wie folgt durchgeführt: 1 g trockenes Material wird in einem 100 ml Messzylinder eingetragen und mit 100 ml entionisiertem Wasser vermischt und anschliessend 14 Stunden stehen gelassen, dann das Volumen des gequollenen Materials am Messzylinder abgelesen.

Biespiel 2:

Stufe I

50 Teile Weissdextrin werden mit 250 Teilen einer 60 %igen, wässrigen Monomethylolacrylamidlösung und 0,025 Teilen Hydrochinon aufgeschlämmt. Diese Anschlämmung, deren pH-Wert 2,5 beträgt, wird während 30 Minuten unter Rühren bei 25°C gehalten. Hierauf wird die Anschlämmung abfiltriert. Das noch feuchte, imprägnierte Dextrin wird während 24 Stunden bei 20°C gelagert und anschliessend unter vermindertem Druck bei 70°C getrocknet. Die Kondensationsreaktion wird dann während 60 Minuten bei 120°C durchgeführt. Nach dem Waschen, Trocknen und Mahlen wie in Beispiel 1

angegeben erhält man 50 Teile eines weissen, pulverförmigen, acrylmodifizierten Polysaccharids, das modifizierte Saccharideinheiten der Formel

(21) $Sa—O—CH_2—NH—CO—CH = CH_2$

enthält, worin Sa für einen Saccharidrest steht.

Stufe II

50 Teile des nach vorstehend angegebenen Stufe erhaltenen acrylmodifizierten Polysaccharids werden in 300 Teile entionisiertem Wasser aufgeschlämmt. Zu dieser Anschlämmung werden innerhalb von 20 Minuten 80 Teile einer 50% igen, wässrigen Diäthylaminlösung gegeben, wobei der Temperatur des Reaktionsgemisches von selber auf 30°C steigt und sich ein pH-Wert von 12,3 einstellt. Hierauf wird die Anschlämmung auf 50°C aufgeheizt und während 5 Stunden bei dieser Temperatur unter Rühren gehalten, wobei der pH-Wert der Anschlämmung allmählich auf 11,8 sinkt. Die Anschlämmung wird dann abfiltriert. Das so behandelte Polysaccharid wird mit 500 Teilen einer wässrigen 0,1 N Salzsäurelösung gewaschen, dann solange mit entionsisiertem Wasser nachgewaschen, bis der pH-Wert des Filtrats 6,0 beträgt. Das nachgewaschene, modifizierte Polysaccharid wird bei 80°C unter vermindertem Druck getrocknet und gemahlen (Korngrösse 50—150 μm). Man erhält 45 Teile eines gelbstichigen, pulverförmigen, kationisch modifizierten Polysaccharids, das einen Substitutionsgrad von 0,25, ein Ionenaustauschvermögen von 1,4 meq/g, ein Schüttvolumen von 665 g/l, eine Quellung in Wasser von 2,8 ml/g und sehr gute Durchflusseigenschaften aufweist und modifizierte Saccharideinheiten der Formel (20) enthält.

Beispiel 3: Man verfährt wie in Beispiel 1 angegeben, setzt jedoch als Ausgangsmaterial eine handelsübliche, vernetzte Agarose (SEPHAROSE® CL-6B) ein. Man erhält ebenfalls 45 Teile des kationisch modifizierten Polysaccharids mit kationischen Einheiten der Formel (20) und sehr guten Durchflusseigenschaften, das jedoch einen Substitutionsgrad von 0,21, ein Ionenaustauschvermögen von 0,86 meq/g, ein Schüttvolumen von 625 g/l und eine Quellung in Wasser von 7 ml/g aufweist.

Beispiel 4: Man verfährt wie in den Stufen I und II des Beispiels 2 angegeben, setzt jedoch als Ausgangsmaterial Weissdextrin, das vor seinem Einsatz mit einer wässrigen Natriumcarbonatlösung behandelt worden ist, so dass der pH-Wert der Weissdextrinanschlämmung mit der Monomethylolacrylamidlösung und Hydrochinon 7,0 (statt 2,5) beträgt. Man erhält ebenfalls 45 Teile des kationisch modifizierten Polysaccharids mit kationischen Einheiten der Formel (20) und den in Stufe II des Beispiels 2 angegebenen Eigenschaften, das jedoch ein Ionenaustauschvermögen von 1,75 meq/g aufweist.

Beispiel 5: Man verfährt wie in Stufe II des Beispiels 2 angegeben, setzt jedoch 112 Teile einer 50 %igen, wässrigen, mit Natriumhydroxid alkalisch gestellten Natriumpyrosulfitlösung (an Stele von 80 Teilen der 50 %igen wässrigen Diäthylaminlösung) ein. Der pH-Wert der Anschlämmung wird durch Zusatz einer wässrigen, 2 N Natriumhydroxydlösung auf 12,5 eingestellt. Die Anschlämmung wird auf 50°C aufgeheizt und bei dieser Temperatur während 5 Stunden unter Rühren gehalten. Die Anschlämmung wird dann abfiltriert. Das so behandelte Polysaccharid wird wie in Stufe II des Beispiels 2 angegeben gewaschen und getrocknet. Man erhält 70 Teile eines weissen, pulverförmigen anionische modifizierten Polysaccharids, das einen Substitutionsgrad von 0,3 ein Ionenaustauschvermögen von 2,9 meq/g, eines Schüttvolumen von 670 g/l, ein Quellung in Wasser von 3,5 ml/g und sehr gute Durchflusseigenschaften aufweist und modifizierte Saccharideinheiten der Formel

(22) $Sa—O—CH_2—NH—CO—CH_2—CH_2—SO^{\ominus}{}_3\ Na^{\oplus}$

enthält, worin Sa für einen Saccharidrest steht.

Beispiel 6: Man verfährt wie in Beispiel 1 angegeben, setzt jedoch 250 Teile der 50 %igen, wässrigen Lösung des Umsetzungsproduktes gemäss Vorschrift B (statt A) ein und lagert zusätzlich das noch feuchte, imprägnierte Polysaccharidpulver (nach der Filtration der Anschlämmung) während 24 Stunden bei 20°C, Die Kondensationsreaktion und die Aufarbeitung des behandelten Polysaccharidpulvers (Waschen, Trocknen und Mahlen) wird ebenfalls wie in Beispiel 1 angegeben durchgeführt. Man erhält 65 Teile eines weissen, pulverförmigen, anionisch modifizierten Polysaccharids, das einen Substitutionsgrad von 0,35, ein Ionenaustauschvermögen von 2,0 meq/g, ein Schüttvolumen von 430 g/l, eine Quellung in Wasser von 38 ml/g und sehr gute Durchflusseigenschaften aufweist und modifizierte Saccharideinheiten der Formel (22) enthält.

Beispiel 7: 20 Teile einer handelsüblichen, vernetzten Agarose (SEPHAROSE® CL-6B) werden in 100 Teilen einer 50 %igen, wässerigen Lösung des Umsetzungsproduktes gemäss Vorschrift B, welche vorgängig mit einer wässrigen 1N-Salzsäurelösung auf den pH-Wert von 3,5 eingestellt worden ist, aufgeschlämmt. Diese Anschlämung wird während 30 Minuten bei 20°C unter Rühren gehalten und dann abfiltriert. Das noch feuchte, imprägnierte Polysaccharidpulver wird während 24 Stunden bei 20°C gelagert. Das anschliessende Trocken und die Kondensationsreaktion sowie die Aufarbeitung des behandelten Polysaccharidpulvers

(Waschen, Trocknen und Mahlen) wird wie in Beispiel 1 angegeben durchgeführt. Man erhält 20 Teile eines gelblichen, pulverförmigen, anionisch modifizierten Polysaccharids, das einen Substitutionsgrad von 0,30, ein Ionenaustauschvermögen von 1,7 meq/g, ein Schüttvolumen von 625 g/l, eine Quellung in Wasser von 7 ml/g und sehr gute Durchflusseigenschaften aufweist und modifizierte Saccharrideinheiten der Formel (22) enthält.

Beispiel 8: Man verfährt wie in Beispiel 7 angegeben, setzt jedoch 100 Teile einer 50 %igen, wässrigen Lösung des Umsetzungsproduktes gemäss Herstellungsvorschrift C (statt B) ein. Man erhält nach dem Waschen, Trocknen und Mahlen 19 Teile eines gelblichen, pulverförmigen, kationisch modifizierten Polysaccharids, das einen Substitutionsgrad von 0,35, ein Ionenaustauschvermögen von 1,4 meq/g, ein Schüttvolumen von 625 g/l, eine Quellung in Wasser von 6 ml/g und sehr gute Durchflusseigenschaften aufweist und modifizierte Saccarideinheiten der Formel

(23) 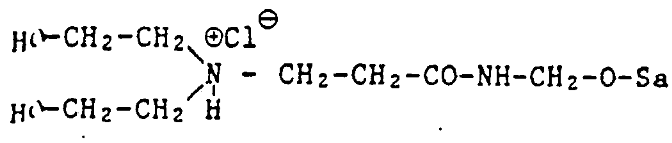

enthält, worin Sa für einen Saccharidrest steht.

Beispiel 9: 20 Teile eines handelsüblichen, vernetzten Dextrans (SEPHADEX® G-50) werden mit 100 Teilen einer 50 %igen, wässrigen Lösung von N-Hydroxymethyl-dimethylphosphonpropionsäureamid welche vorgängig mit einer wässrigen 1 N Salzsäurelösung auf den pH-Wert von 3,5 eingestellt worden ist, aufgeschlämmt. Anschliessen verfährt man wie in Beispiel 1 angegeben, und erhält nach dem Waschen, Trocknen und Mahlen 18 Teile eines weissen, pulverförmigen, modifizierten Polysaccharids, das einen Substitutionsgrad von 0,20 aufweist. Der erhaltene Phosphorester des Polysaccharids wird hierauf in 50 Teilen einer wässrigen 2 N Natriumhydroxydlösung aufgeschlämmt, auf die Rückflusstemperatur von ca. 100°C aufgeheizt, und während 1 Stunde bei dieser Temperatur unter Rühren gehalten.

Die Anschlämmung wird dann auf 20°C abgekühlt und abfiltriert. Nach dem Trocknen bei 70°C unter vermindertem Druck erhält man 17 Teile eines anionisch modifizierten Polysaccharids, das eine Ionenaustauschvermögen von 0,43 meq/g, ein Schüttvolumen von 625 g/l, eine Quellung in Wasser von 5 ml/g und sehr gute Durchflusseigenschaften aufweist und modifizierte Saccharideinheiten der Formel

(24) 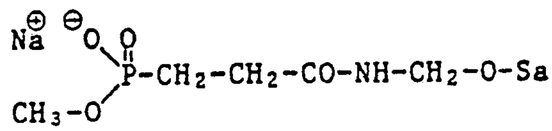

enthält, worin Sa für einen Saccharidrest steht.

Beispiel 10: Man verfährt wie in Beispiel 2 angegeben setzt jedoch bei der Stufe I ein handelsübliches, unvernetztes Dextran (an Stelle von Weissdextrin) ein und führt die Umsetzung mit der Diäthylamin lösung in der Stufe II bei 50°C während 20 Minuten (statt 5 Stunden) durch. Nach dem Abfiltrieren der Anschlämmung wird das so behandelte Polysaccharid unter vermindertem Druck bei 100°C getrocknet, mit 250 Teilen Alkohol gewaschen, vom Alkohol durch Abdekantieren getrennt und wie in Stufe II des Bespiels 2 angegeben getrocknet und gemahlen. Man erhält 40 Teile eines pulverförmigen, leicht gelblichen, kationisch modifizierten Polysaccharids, das ein Ionenaustauschvermögen von 1,6 meq/g, einen Substitutionsgrad von 0,35, ein Schüttvolumen von 600 g/l, eine Quellung in Wasser von 5 ml/g und gute Durchflusseigensshaften aufweist und modifizierte Saccharideinheiten der Formel (20) enthält.

Applikationsbeispiele:

Beispiel 11: 6 Teile des modifizierten Polysaccharids gemäss Beispiel 2 (Stufe II) werden in 50 Teilen destilliertem Wasser aufgeschlämmt und während 30 Minuten unter Rühren bei 20°C gehalten. Der pH-Wert der Anschlämmung beträgt 6,0. Die Anschlämmung wird nun in eine Chromatographiesäule aus Glas (Durchmesser 1,27 cm, Länge 33 cm) eingefüllt. Das homogene Bett des modifizierten Polysaccharids als stationäre Phase weist ein Volumen von 16,5 ml auf (Füllhöhe 13 cm). Bei einer Durchflussgeschwindigkeit von 700 $ml \cdot h^{-1} \cdot cm^{-2}$ (Gegendruck der Säule 2 bis 3 bar) wird das modifizierte Polysaccharid zuerst während einer Stunde mit destilliertem Wasser gespült, dann mit einer wässrigen 0,1 N Salzsäurelösung aktiviert und hierauf mit einer wässrigen 0,5 N Natriumchloridlösung neutral gewaschen. Nun wird die Säule mit 5 Teilen einer 0,5 %igen, wässrigen Lösung eines handelsüblichen, stark sulfonierten Ligninsulfonatgemisches aus Holzaufschluss, die einen pH-Wert von 10,0 aufweist, beschickt. Bei einer Durchflussgeschwindigkeit von 100 $ml \cdot h^{-1} \cdot cm^{-2}$ werden alle Komponenten des Ligninsulfonatgemisches auf dem modifizierten Polysaccharid adsorbiert.

Dann werden die Komponenten des Ligninsulfonatgemisches mit mehreren Elutionsmitteln mit steigenden Elektrolytkonzentrationen als mobilen Phasen aus dem modifizierten Polysaccharid als

stationärer Phase chromatographisch getrennt. Zu diesem Zweck wird ein Fraktionensammler eingesetzt, der das Eluat in Fraktionen von jeweils 4 ml abtrennt, wobei die Durchflussgeschwindigkeit der flüssigen Phase durch die stationäre Phase 100 $ml \cdot h^{-1} \cdot cm^{-2}$ beträgt. Die spektrale Adsorption jeder der 4 ml Fraktionen wird bei 250 nm gemessen, um einen Konzentrationsvergleich bezüglich Komponenten des Ligninsulfonatgemisches zu ermöglichen. Die Fraktionen, die keine Absorption aufweisen, werden verworfen. Die Absorption aufweisenden Fraktionen werden gesammelt. Es werden somit im Verlauf des Trennvorgangs 5 Komponenten des Ligninsulfonatgemisches eluiert. Der Verlauf der chromatographischen Trennung des Ligninsulfonatgemisches mit den verwendeten Elutionsmitteln wird in der nachfolgenden Tabelle I angegeben:

Tabelle I

| Elutionsmittel (wässrige Lösungen), pH-Wert | ml Eluat | laufende Nr. der 4 ml Fraktionen | eluierte Komponenten | | |
|---|---|---|---|---|---|
| | | | Nr. | Volumen ml | % des Gemisches |
| NaCl 0,5 N pH 7,0 | 80 | 1-20 | - | - | - |
| NaCl 1 N pH 7,0 | 88<br>108<br>160 | 21-22<br>23-27<br>28-40 | -<br>I<br>- | -<br>20<br>- | -<br>0,9<br>- |
| NaCl 2 N pH 7,0 | 168<br>184<br>200 | 41-42<br>43-46<br>47-50 | -<br>II<br>- | -<br>16<br>- | -<br>1,8<br>- |
| 10%iger, Tris (hydroxymethyl)-aminomethan-Puffer in $H_2O$ dest. pH 10,5 | 228<br>272<br>280 | 51-57<br>58-68<br>69-70 | -<br>III<br>- | -<br>44<br>- | -<br>13,5<br>- |
| 0,4%ige $NH_3$-Lösung pH 11,2 | 288<br>324<br>360 | 71-72<br>73-81<br>82-90 | -<br>IV<br>- | -<br>36<br>- | -<br>28,8<br>- |
| 7,5%ige $NH_3$-Lösung pH 12,3 | 368<br>408<br>440 | 91-92<br>93-102<br>103-110 | -<br>V<br>- | -<br>40<br>- | -<br>54,9<br>- |

Im IR-Spektrum weist die schwach polare Komponente I (0,9% des ursprünglichen Ligninsulfonatgemisches) die charakteristische —C=O Bande, die Komponente II (1,8% des Gemisches) neben phenolischen Gruppen die charakteristische $—COO^{\ominus}$ Bande und die Komponente III (13,5% des Gemisches) die charakteristischen, polaren $SO_3^{\ominus}$ und $SO_3Na$ Banden auf. Aufgrund ihres chromatographischen Verhaltens stellen, den höheren pH-Werten der mobilen Phase entsprechend, die Komponente IV (28,8%) des Gemisches) eine polare Ligninsulfonatfraktion und die Komponente V (54,9% des Gemisches) eine sehr polare, hoch sulfonierte Ligninfraktion dar.

Nach abgeschlossener Trennung des Ligninsufonatgemisches mit insgesamt 440 ml Elutionsmittel wird das modifizierte Polysaccharid in der Chromatographiesäule mit ca. 100 ml einer wässrigen, 0,1 N Salzsäurelösung gespült, bis das Eluat einen pH-Wert von 1—2 aufweist. Nach dem Waschen des modifizierten Polysaccharids mit ca. 100 ml. einer wässrigen 0,5 N Natriumchoridlösung (bis das Eluat einen pH-Wert von 5,5 aufweist), steht das modifizierte Polysaccharid als regenerierte, stationäre Phase für weitere chromatographische Trennungen bereit.

Aehnliche Ergebnisse der chromatographischen Trennung der Komponenten des Ligninsulfonatgemisches werden auch erzielt, wenn man das kationisch modifizierte Polysaccharid gemäss Beispiel 1, 3 oder 4 als stationäre Phase einsetzt.

Beispiel 12: Man verfährt wie in Beispiel 11 angegeben, schlämmt jedoch 7 Teile (statt 6 Teilen) des modifizierten Polysaccharids gemäss Beispiel 2 (Stufe II) in 70 Teilen (statt 50 Teilen) dest. Wasser auf, erhält ein homogenes Bett der stationären Phase in der Chromatographiesäule, das ein Volumen von 20 ml (statt 16,5 ml) und eine Füllhöhe von 16,5 cm (statt 12 cm) aufweist, beschickt die Säule mit einem handelsüblichen, schwach sulfonierten (statt stark sulfonierten) Ligninsulfonatgemisch, eluiert 4 Komponenten (statt 5 Komponenten) des Ligninsulfonatgemisches mit den in der nachfolgenden Tabelle II angegebenen Elutionsmitteln und setzt einen Fraktionensamler ein, des Eluatfraktionen von 5 ml (statt 4 ml) abtrennt. Der Verlauf der chromatographischen Trennung wird in der nachfolgenden Tabelle II angegeben:

Tabelle II

| Elutionsmittel (wässrige Lösungen), pH-Wert | ml Eluat | laufende Nr. der 5 ml Fraktionen | eluierte Komponenten | | |
|---|---|---|---|---|---|
| | | | Nr. | Volumen ml | % des Gemisches |
| 10%iger, Tris (hydroxymethyl) aminomethan-Puffer in $H_2O$ dest. pH 10,5 | 20 | 1-4 | - | - | - |
| | 30 | 5-6 | I | 10 | 7 |
| | 50 | 7-10 | - | - | - |
| 0,4%ige $NH_3$ Lösung pH 11,2 | 70 | 11-14 | - | - | - |
| | 100 | 15-20 | II | 30 | 54 |
| | 150 | 21-30 | - | - | - |
| 7,2%ige $NH_3$ Lösung pH 12,3 | 170 | 31-34 | | | |
| | 200 | 35-40 | III | 30 | 23 |
| | 250 | 41-50 | | | |
| 0,1 N NaOH-Lösung pH 14 | 270 | 51-54 | | | |
| | 300 | 55-60 | IV | 30 | 16 |
| | 350 | 61-70 | | | |

Aehnliche Ergebnisse der chromatographischen Trennung der Komponenten des Ligninsulfatgemisches werden auch erzielt, wenn man das kationisch modifiziert Polysaccharid gemäss Beispiel 10 als stationäre Phase einsetzt.

Beispiel 13: Man verfährt wie in Beispiel 11 angegeben, schlämmt jedoch 6 Teile des modifizierten Polysaccharids gemäss Beispiel 8 (statt 6 Teilen des modifizierten Polysaccharids gemäss Stufe II des Beispiels 2) in 70 Teilen (statt 50 Teilen) destilliertem Wasser auf, erhält ein homogenes Bett der stationären Phase in der Chromatographiesäule, das ein Volumen von 34 ml (statt 16,5 ml) und eine Füllhöhe von 26,5 cm (statt 13 cm) aufweist, eluiert 6 Komponenten (statt 5 Komponenten) des Ligninsulfonatgemisches mit den in den nachfolgenden Tabelle III angegebenen Elutionsmitteln und setzt einen Fraktionensammler ein, das Eluatfraktionen von 5 ml (statt 4 ml) abtrennt. Der Verlauf der chromatographischen Trennung sind in der nachfolgenden Tabelle III angegeben:

Tabelle III

| Elutionsmittel (wässrige Lösungen), pH-Wert | ml Eluat | laufende Nr. der 5 ml Fraktionen | eluierte Komponenten | | |
|---|---|---|---|---|---|
| | | | Nr. | Volumen ml | % des Gemisches |
| NaCl 0,17N pH 7,0 | 20 | 1-4 | - | - | - |
| | 30 | 5-6 | I | 10 | 6 |
| | 50 | 7-10 | - | - | - |
| NaCl 1N pH 7,0 | 70 | 11-14 | - | | - |
| | 100 | 15-20 | II | 30 | 13 |
| | 150 | 21-30 | - | - | - |
| Pufferlösung pH 8,0 | 170 | 31-34 | - | - | - |
| | 200 | 35-40 | III | 30 | 4 |
| | 250 | 41-50 | - | - | - |
| Pufferlösung pH 9,0 | 270 | 51-54 | - | - | - |
| | 300 | 55-60 | IV | 30 | 12 |
| | 350 | 61-70 | - | - | - |
| Pufferlösung pH 10,0 | 370 | 71-74 | - | - | - |
| | 400 | 75-80 | V | 30 | 35 |
| | 450 | 81-90 | - | - | - |
| 10%iger Tris-(hydroxymethyl) | 470 | 91-94 | - | - | - |
| aminomethan-Puffer | 500 | 95-100 | VI | 30 | 30 |
| in $H_2O$ dest. pH 10,5 | 550 | 101-110 | - | - | - |

Beispiel 14: 7 Teile des modifizierten Polysaccharids gemäss Beispiel 5 werden in 70 Teilen destilliertem Wasser aufgeschlämmt und während 30 Minuten unter Rühren bei 20°C gehalten. Der pH-Wert der Anschlämmung beträgt 6,0. Die Anschlämmung wird nun in eine Chromatographiesäule aus Glas (Ø 5 1,27 cm, L 33 cm) eingefüllt. Das homogene Bett des modifizierten Polysaccharids als stationäre Phase weist ein Volumen von 24,5 ml (Füllhöhe 20 cm) auf. Bei einer Durchflussgeschwindigkeit von 700 $ml \cdot h^{-1} \cdot cm^{-2}$ (Gegendruck der Säule 2 bis 3 bar) wird das modifizierte Polysaccharid zuerst während einer Stunde mit destiliertem Wasser gespült, dann mit einer wässrigen 5 %igen Natriumcarbonatlösung aktiviert und hierauf mit Wasser neutral gewaschen. Nun wird die Säule mit 5 Teilen einer 0,5 %igen, wässrigen Lösung eines handelsüblichen Ligninamingemisches aus Holzaufschluss, die eine pH-Wert von 6,0 aufweist, beschickt. Bei einer Durchflussgeschwindigkeit von 100 $ml \cdot h^{-1} \cdot cm^{-2}$ werden alle Komponenten des Ligninamingemisches auf dem modifizierten Polysaccharid adsorbiert. Nun werden die Komponenten des Ligninamingemisches mit mehreren Elutionsmitteln (verschiedenen Pufferlössungen mit steigenden pH-Werten) als mobilen Phasen aus dem modifizierten Polysaccharid als stationärer Phase chromatographisch getrennt. Zu diesem Zweck werden mittels eines Fraktionensammlers Fraktionen von je 5 ml der entsprechenden Eluate der Pufferlösungen gesammelt und die spektrale Absorption der jeweiligen Fraktion bei 250 nm gemessen, um eine Kenzentrationsvergleich bezüglich Komponenten des Ligninamingemisches zu ermöglichen. Es werden somit im Verlauf des Trennvorgangs 4 Komponenten des Ligninamins eluiert. Der Verlauf der chromatographischen Trennung des Ligninamingemisches mit den verwendeten Elutionsmitteln ist in der nachfolgenden Tabelle IV angegeben.

Tabelle IV

| pH Wert der eingesetzten Elutionsmittel | ml Eluat | laufende Nr. der 5 ml Fraktionen | eluierte Komponenten | | |
|---|---|---|---|---|---|
| | | | Nr. | Volumen ml | % des Gemisches |
| 7,0 (Destilliertes Wasser) | 100 | 1-10 | - | - | - |
| 8,0 (Pufferlösung) | 200 | 11-20 | I | 100 | 23 |
| 8,5 (Pufferlösung) | 300 | 21-30 | - | - | - |
| 9,0 (Pufferlösung) | 400 | 31-40 | - | - | - |
| 10,0 (Pufferlösung) | 500 | 41-50 | - | - | - |
| 11,0 (Pufferlösung) | 600 | 51-60 | II | 100 | 31 |
| 12,0 (Pufferlösung) | 700 | 61-70 | III | 100 | 28 |
| 13,0 (Pufferlösung) | 800 | 71-80 | IV | 100 | 18 |

Aehnliche Ergebnisse der chromatographischen Trennung der Komponenten des Ligninamingemisches werden auch erzielt, wenn man das anionisch modifizierte Polysaccharid gemäss Beispiel 6, 7 oder 9 als stationäre Phase einsetzt.

Beispiel 15: Man verfährt wie in Beispiel 14 angegeben, setzt jedoch 1 Teil des modifizierten Polysaccharids gemäss Beispiel 6 (statt 5) ein, erhält ein homogenes Bett der stationären Phase, das ein Volumen von 36 ml (statt 24,5 ml) und eine Füllhöhe von 28,5 cm (statt 25 cm) aufweist und beschickt die Säule nach dem Spülen, Aktivieren und Waschen der stationären Phase mit einem Farbstoffgemisch aus 50% C.I. Basic Blue 3, 25% C.I. Basic Yellow 45 und 25% C.I. Basic Red 14. Bei einer Durchflussgeschwindigkeit von 100 $ml \cdot h^{-1} \cdot cm^{-2}$ werden die einzelnen Farbstoffe des Gemisches auf dem modifizierten Polysaccharid vollständig zurückgehalten.

Nun werden die einzelnen Farbstoffe des Gemisches mit einer Pufferlösung pH 4,0 als Elutionsmittel als mobiler Phase aus dem modifizierten Polysaccharid als stationärer Phase chromatographisch getrennt. Zu diesem Zweck werden Fraktionen von je 5 ml der entsprechenden Eluate gesammelt und dann die Absorbtion der jeweiligen Fraktion (bei den jeweiligen Absorbtionsmaxima der verschiedenen Farbstoffe) gemessen, um einem Konzentrationsvergleich bezüglich Komponenten der Farbstoffgemisches zu ermöglichen. Es werden somit in Verlauf des Trennvorgangs 4 Komponenten eluiert. Der Verlauf der chromatographischen Trennung des Farbstoffgemisches ist in der nachfolgenden Tabelle V angegeben.

Tabelle V

| pH-Wert der als Elutionsmittel eingesetzten Pufferlösung | ml Eluat | laufende Nr. der 5 ml Fraktionen | eluierte Farbstoff-Komponenten | | |
|---|---|---|---|---|---|
| | | | Nr. | Volumen ml | %* |
| 4,0 | 25 | 1-5 | I | 25 | rot 6%<br>blau 6% |
| 4,0 | 50 | 6-10 | II | 25 | rot 18%<br>blau 19% |
| 4,0 | 75 | 11-15 | III | 25 | rot 1%<br>blau 25% |
| 4,0 | 100 | 16-20 | IV | 25 | gelb 25% |

*der im Gemisch erhaltenen Farbstoffkomponenten

Beispiel 16: Man verfährt wie in Beispiel 14 angegeben, setzt jedoch 5 Teile des modifizierten Polysaccharid gemäs Beispiel 7 (statt 5) ein und erhält ein homogenes Bett der stationären Phase, das ein Volumen von 33,5 ml (statt 24,5 ml) und eine Füllhöhe von 26,5 cm (statt 20 cm) aufweist. Nach dem Spülen, Aktivieren und Waschen der stationären Phase wie im Beispiel 1 angegeben wird nun die Säule mit einem Farbstoffgemisch aus 33% C.I. Basic Blue, 33% C.I. Basic Red 14 und 34% C.I. Basic Yellow 45 beschickt. Man führt die chromatographische Trennung des Gemisches wie in Beispiel 15 angegeben durch, trennt jedoch 3 (statt 4) Fraktionen des Farbstoffgemisches und setzt eine Pufferlösung pH 4,5 (statt 4,6) ein. Der Verlauf der chromatographischen Trennung des Farbstoffgemisches ist in der nachfolgenden Tabelle VI angegeben.

Tabelle VI:

| pH-Wert der als Elutionsmittel eingesetzten Pufferlösung | ml Eluat | laufende Nr. der 5 ml Fraktionen | eluierte Farbstoff-Komponente | | |
|---|---|---|---|---|---|
| | | | Nr. | Volumen ml | %* |
| 4,5 | 100 | 1-20 | - | - | - |
| 4,5 | 200 | 21-40 | I | 100 | blau 33% |
| 4,5 | 300 | 41-60 | II | 100 | rot 33% |
| 4,5 | 400 | 61-80 | III | 100 | gelb 34% |
| 4,5 | 500 | 81-100 | - | - | - |

* der im Gemisch enthaltenen Farbstoffkomponente

Beispiel 17: Man verährt wie in Beispiel 14 angegeben, setzt jedoch 7 Teile des modifizierten Polysaccharids gemäss Beispiel 9 (statt 5) ein und erhält ein homogenes Bett der stationären Phase, die ein Volumen von 35 ml (statt 24,5 ml) und eine Füllhöhe von 28,5 cm (statt 20 cm) aufweist. Nach dem Spülen, Aktivieren und Waschen der stationären Phase wie in Beispiel 14 angegeben, wird nun die Säule mit einem Farbstoffgemisch beschickt, das 25% C.I. Basic Yellow 45 und 75% C.I. Basic Red 14 enthält. Man führt die chromatographische Trennung des Gemisches wie in Beispiel 15 angegeben durch, trennt jedoch 5 (statt 4) Fraktionen des Farbstoffgemisches und setzt 3 Pufferlösung pH 6, 4 und 2 (statt eine Pufferlösung pH 4,0) ein. Der Verlauf der chromatographische Trennung des Farbstoffgemisches ist in der nachfolgenden Tabelle VII angegeben.

Tabelle VII

| pH-Wert der als Elutionsmittel eingesetzten Pufferlösungen | ml Eluat | laufende Nr. der 5 ml Fraktionen | eluierte Komponenten | | |
|---|---|---|---|---|---|
| | | | Nr. | Volumen ml | %* |
| 6,0 | 120 | 1-24 | I | 120 | rot 25% |
| 6,0 | 170 | 25-34 | II | 50 | rot 25% |
| 4,0 | 220 | 35-44 | III | 50 | rot 14% |
| 2,0 | 290 | 45-58 | IV | 70 | rot 10%<br>gelb 12% |
| 2,0 | 390 | 59-78 | V | 100 | rot 1%<br>gelb 13% |

* der im Gemisch enthaltenen Komponenten

Beispiel 18: Eine Chromatographiesäule mit einem Durchmesser von 1,27 cm wird mit 7 Teilen des kationisch modifizierten Polysaccharids gemäss Beispiel 8 (entsprechend 42 ml modifiziertes Polysaccharids und einer Füllhöhe von 33 cm) gefüllt. Nun wird mit einer Durchflussgeschwindigkeit von 50 $ml \cdot h^{-1} \cdot cm^{-2}$ bei 0,01 bar 250 ml einer 1,42 %igen, wässrigen Lösung von rohen Cephalosporin C Natriumsalz durch die Säule perkoliert. Der bei 425 nm in einer 1 cm Zelle gemessene Absorptionswert der stark braunstichigen Lösung vor dem Perkolieren beträgt 1,65, während das Perkolat einen Absorptionswert von nur 0,935 aufweist. Die Ausbeute an perkoliertem, gereinigtem Cephalosporin C Natriumsalz, bezogen auf rohem Natriumsalz, beträgt 95,5%.

Aehnliche Ergebnisse werden erzielt, wenn man anstelle des modifizierten Polysaccharids gemäss Beispiel 8 das kationisch modifizierte Polysaccharid gemäss einem der Beispiele 1, 2 (Stufe II), 3, 8 oder 10 einsetzt.

Beispiel 19: 5 g des kationisch modifizierten Polysaccharids gemäss Beispiel 8 werden in 60 ml destilliertem Wasser aufgeschlämmt und während 30 Minuten unter Rühren bei 20°C gehalten. Der pH-Wert der Anschlämmung beträgt 6,0. Die Anschlämmung wird nun in eine Chromatographiesäule aus Glas (Durchmesser 1,3 cm, Länge 30 cm) eingefült. Das homogene Bett des Cellulosematerials weist ein Volumen von 29 ml auf (Füllhöhe 23 cm). Die erhaltene Säule hat eine Durchflussgeschwindigkeit von 720 $ml \cdot h^{-1} \cdot cm^{-2}$ bei einem Gegendruck von 1,5 bar. Die Säule wird wie in Beispiel 11 angegeben aktiviert und dann gewaschen.

Nun wird die Säule mit einer wässrigen Lösung beschickt, die 1% einer Huminsäure enthält. Die eingesetzte Huminsäure hat ein Molekulargewicht von 600 bis 1000 und einen Aschengehalt von 10 bis 15% (Provenienz FLUKA, Katalog Nr. 53680, Aufl. 1984). Die Huminsäurelösung wird durch die Säule durchgepumpt, bis am Ausfluss der Säule die Gegenwart von Huminsäure mittels eines UV-Detektors (Messung bei 240 nm) festgestellt wird.

Die Abtrennung der Huminsäure wird durch Elution mit einer wässrigen Ammoniaklösung durchgeführt, die einen pH-Wert von 12,3 aufweist. Der Elutionsvorgang wird so lange fortgesetzt, bis der UV-Detektor am Ausfluss der Säule keine Huminsäure mehr anzeigt.

Aufgrund des Gehalts an Huminsäure vor und nach dem Durchfluss durch die Säule kann die Belastbarkeit des kationisch modifizierten Polysaccharids berechnet werden. Sie beträgt 50 mg Huminsäure pro g Trennmaterial.

Zur Regeneration wird die Säule mit destilliertem Wasser gewaschen, bis der pH-Wert des Waschwassers 7 bis 8 beträgt und hierauf mit einer wässrigen 0,1 N Salzsäurelösung aktiviert, bis der pH-Wert des Eluats 1 bis 2 beträgt. Dann wird die Säule nochmals mit 50 ml destilliertem Wasser gewaschen.

Nach dem Regenerationsschritt wird die Säule, wie vorstehend angegeben, nochmals mit der wässrigen, 1 %igen Huminsäurelösung beschickt.

Die Belasterbarkeit beträgt nach einem Regenerationsschritt 40 mg Huminsäure pro g Trennmaterial.

Der Regenerationsschritt und die Trennung der Huminsäurelösung wird nochmals wiederholt.

Die Belastbarkeit beträgt dann nach zwei Regenerationsschritten 37 mg Huminsäure pro g Trennmaterial.

Beispiel 20: Man verfährt wie in Beispiel 19 angegeben, setzt jedoch als Trennmaterial das kationisch modifizierte Polysaccharid gemäss Beispiel 2 ein.

Die Belastbarkeit beträgt 36 mg und nach einem Regenerationsschritt 30 mg Huminsäure pro g Trennmaterial.

Aehnliche Ergebnisse werden erzielt, wenn man das kationisch modifizierte Polysaccharid gemäss einem der Beispiele 3, 4, 8 oder 10 einsetzt.

Beispiel 21: 85 g der in Beispiel 20 eingesetzten Huminsäure wird in 500 ml destilliertem Wasser gelöst. Unter Rühren wird 1 g des kationisch modifizierten Polysaccharids gemäss Beispiel 1 zur Huminsäurelösung gegeben. Der Ansatz wird bei 20°C während 20 Minuten unter Rühren gehalten. Nach Stehenlassen des Ansatzes kann durch Messung der UV-Absorption bei 250 nm die noch in Lösung befindliche Huminsäure bestimmt werden und die Menge Huminsäure berechnet werden, die durch das modifizierte Polysaccharid aus der Lösung entfernt wird.

Im oben beschriebenen Satzbetrieb können 42 mg Huminsäure pro g modifiziertes Polysaccharid aus einer wässrigen Lösung entfernt werden.

Beispiel 22: Man verfährt wie in Beispiel 21 angegeben, hält den Ansatz (Huminsäurelösung und kationisch modifiziertes Polysaccharid) unter Rühren während 20 Minuten jedoch bei 40°C. Die Menge der zurückgehaltenen Huminsäure beträgt 57 mg pro g modifiziertes Polysaccharid.

**Patentansprüche**

1. Chemisch modifizierte Polysaccharide, erhältlich aus vernetztem Dextrin, gegebenenfalls vernetztem Dextran oder gegebenenfalls vernetzter Agarose, dadurch gekennzeichnet, dass sie α-glykosidische Verknüpfungen und über die Gruppierung der Formel

$$—CO—NH—CH_2—O—$$

an den Polysaccharidbestandteil gebundene, ionische Bestandteile aufweisen, wobei die Carbonylgruppe mit dem ionischen Bestandteil und das Sauerstoffatom mit dem Polysaccharidbestandteil verbunden sind.

2. Polysaccharide nach Anspruch 1, dadurch gekennzeichnet, dass sie kationisch modifiziert sind und basische Reste der Formel

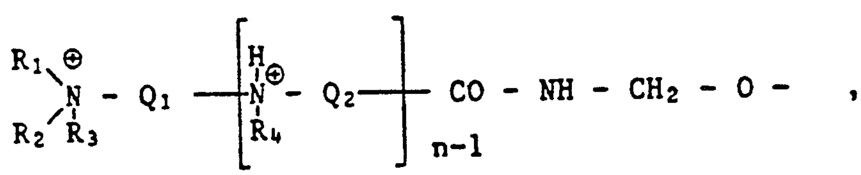

aufweisen, worin n 1 oder 2, $R_1$, $R_2$, $R_3$ und $R_4$ je Wasserstoff, unsubstituiertes oder durch Hydroxyl, Nitril, Halogen oder $C_1$—$C_4$-Alkoxy substituiertes $C_1$—$C_4$-Alkyl, unsubstituiertes oder durch $C_1$—$C_4$-Alkyl substituiertes Cycloalkyl, unsubstituiertes oder durch Nitro oder Halogen substituiertes Benzyl oder Phenyl, oder $R_1$ und $R_2$ zusammen mit dem sie verbindenden Stickstoffatom und gegebenenfalls weiteren Heteroatomen einen 5- oder 6-gliedrigen, heterocyclischen Ring oder $R_3$ und $R_4$ und zusammen mit der sie verbindenden Gruppierung

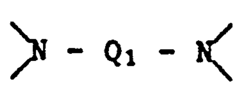

und gegebenenfalls weiteren Heteroatomen auch einen 5- oder 6-gliedrigen heterocyclischen Ring, und $Q_1$ und $Q_2$ je Alkylen mit 1 bis 8 Kohlenstoffatomen bedeuten.

3. Polysaccharide nach Anspruch 1, dadurch gekennzeichnet, dass sie amphoter sind und zwitterionische Reste der Formel

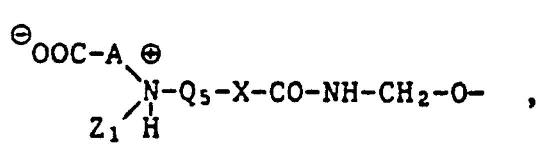

aufweisen, worin X —O—, —S—,

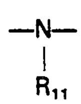

oder die direke Bindung, $R_{11}$ Wasserstoff oder Alkyl mit 1 bis 4 Kohlenstoffatomen, $Q_5$ unsubstituiertes oder durch $C_1$—$C_4$-Alkyl oder Phenyl substituiertes $C_1$—$C_8$-Alkylen oder Phenylen, $Z_1$ —B—$COO^{\ominus}$, Alkyl mit 1 bis 4 Kohlenstoffatomen oder Wasserstoff und A und B je unsubstituiertes oder durch $C_1$—$C_4$-Alkyl, $C_1$—$C_4$-Alkoxy oder Phenyl substituiertes $C_1$—$C_8$-Alkylen bedeuten.

4. Polysaccharide nach Anspruch 1, dadurch gekennzeichnet, dass sie anionisch modifiziert sind und saure Reste der Formel

$$^{\ominus}Y_1—Q_5—CO—NH—CH_2—O—,$$

aufweisen, worin $Y_1^{\ominus}$ Carboxyl oder den Säurerest einer mehrbasischen, anorganischen, Sauerstoff enthaltenen Säure bedeutet und $Q_5$ die in Anspruch 3 angegebenen Bedeutungen hat.

5. Polysaccharide nach einem der Ansprüche 1 bis 4, dadurch gekennzeichnet, dass sie einen Substitutionsgrad von 0,1 bis 0,8 aufweisen.

6. Verfahren zur Herstellung von ionisch modifizierten Polysacchariden gemäss einem der Ansprüche 1 bis 5, dadurch gekennzeichnet, dass man die Polysaccharide gemäss Anspruch 1 mit einer Verbindung umsetzt, die eine N-Methylolamidgruppe aufweist.

7. Verfahren nach Anspruch 6, dadurch gekennzeichnet, dass man die Polysaccharide mit einer Methylolverbindung der Formel

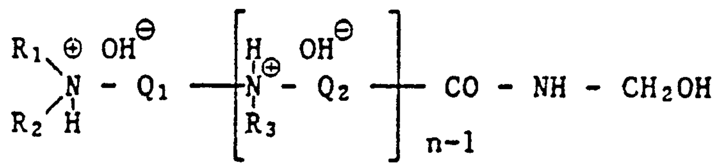
,

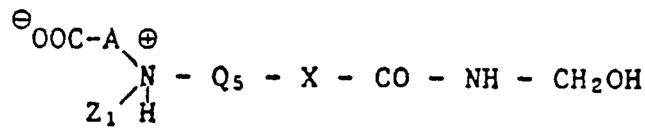

oder

$$H^{\oplus}\ ^{\ominus}Y_1—Q_5—CO—NH—CH_2OH$$

umsetzt, worin A, $Q_1$, $Q_2$, $Q_5$, $R_1$, $R_2$, $R_3$, $R_4$, X, $Y_1^{\ominus}$, $Z_1$ und n die in den Ansprüchen 2, 3 und 4 angegebenen Bedeutungen haben.

8. Verfahren nach Anspruch 6, dadurch gekennzeichnet, dass man die Polysaccharide zuerst mit Methylolacrylamid als Methylolverbindung umsetzt und anschliessend den ionischen Bestandteil durch Additionsreaktion an der Doppelbindung des acrylmodifizierten Zwischenproduktes der Verbindung der Formel

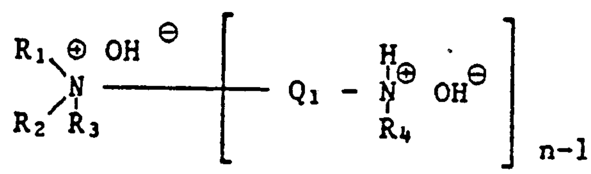
,

$$^{\ominus}OOC - A - NH_2 - Z$$

oder

$$Y_1^{\ominus}\ H^{\oplus},$$

worin A, $R_1$, $R_2$, $R_3$, $R_4$, $Q_1$, $Y_1^{\oplus}$ und $Z_1$ die in den Ansprüchen 2, 3 und 4 angegebenen Bedeutungen haben, einführt.

9. Verwendung der ionisch modifizierten Polysaccharide gemäss einem der Ansprüche 1 bis 5 zur Reinigung von Abwässern und zum Trennen von Substanzgemischen mit einem Anteil ionischer Komponenten.

10. Chromatographisches Trennverfahren von Substanzgemischen mit einem Anteil ionischer Komponenten, dadurch gekennzeichnet, dass man als stationäre Phase ionisch modifizierte Polysaccharide gemäss einem der Ansprüche 1 bis 2 einsetzt.

**Revendications**

1. Polysaccharides modifiés chimiquement, pouvant être obtenus à partir de dextrine réticulée, de dextrane éventuellement réticulé ou d'agarose éventuellement réticulé, caractérisé en ce qu'ils présentent des enchaînements α-glycosidiques et des parties ioniques fixées à la partie polysaccharide, par l'intermédiaire du groupe de formule $—CO—NH—CH_2—O—$, le groupe carbonyle étant alors lié à la partie ionique et l'atome d'oxygène à la partie polysaccharide.

2. Polysaccharides selon la revendication 1, caractérisés en ce qu'ils sont à modification cationique et qu'ils renferment des restes basiques de formule

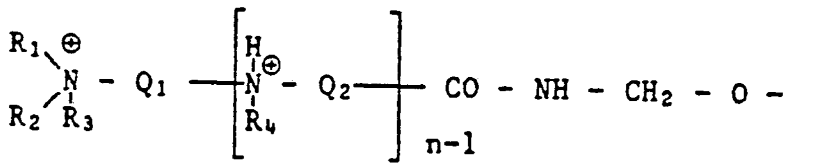

,

dans laquelle n vaut 1 ou 2, $R_1$, $R_2$, $R_3$ et $R_4$ sont chacun hydrogène, alkyle en $C_1—C_4$ non substitué ou substitué par hydroxyle, cyano, halogène ou alcoxy en $C_1—C_4$, cycloalkyle non substitué ou substitué par alkyle en $C_1—C_4$, benzyle ou phényle non substitué ou substitué par nitro ou halogène, ou bien $R_1$ et $R_2$, ensemble avec l'atome d'azote les réunissant et éventuellement d'autres hétéroatomes, forment un hétérocycle à 5 ou 6 chaînons, ou bien $R_3$ et $R_4$, ensemble avec le groupe $>N—Q_1—N<$ les réunissant et éventuellement d'autres hétéroatomes, forment également un hétérocycle à 5 ou 6 chaînons, et $Q_1$ et $Q_2$ représentent chacun un alkylène ayant de 1 à 8 atomes de carbone.

3. Polysaccharides selon la revendication 1, caractérisés en ce qu'ils sont amphotères et renferment des restes zwittérioniques de formule

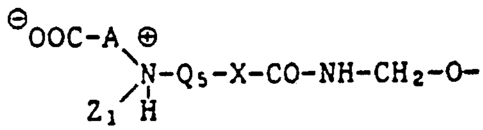

,

dans laquelle X est —O—, —S—, $—N(R_{11})—$ ou la liaison directe, $R_{11}$ est hydrogène ou alkyle en $C_1—C_4$, $Q_5$ est alkylène en $C_1—C_8$ ou phénylène non substitué ou substitué par alkyle en $C_1—C_4$ ou phényle, $Z_1$ est $—B—COO^{\ominus}$, alkyle en $C_1—C_4$ ou hydrogène, et A et B sont chacun alkylène en $C_1—C_8$ non substitué ou substitué par alkyle en $C_1—C_4$, alcoxy en $C_1—C_4$ ou phényle.

4. Polysaccharides selon la revendication 1, caractérisés en ce qu'ils sont à modification anionique et renferment des restes acides de formule

$$^{\ominus}Y_1—Q_5—CO—NH—CH_2—O—,$$

dans laquelle $Y_1^{\ominus}$ est carboxyle ou le reste acide d'un polyacide oxygéné inorganique, et $Q_5$ a les significations indiquées dans la revendication 3.

5. Polysaccharides selon une des revendications 1 à 4, caractérisés en ce qu'ils présentent un degré de substitution de 0,1 à 0,8.

6. Procédé de préparation de polysaccharides à modification ionique selon une des revendications 1 à 5, caractérisé en ce que l'on fait réagir les polysaccharides selon la revendication 1 avec un composé présentant un groupe N-hydroxyméthylamide.

7. Procédé selon la revendication 6, caractérisé en ce que l'on fait réagir les polysaccharides avec un composé hydroxyméthyle de formule

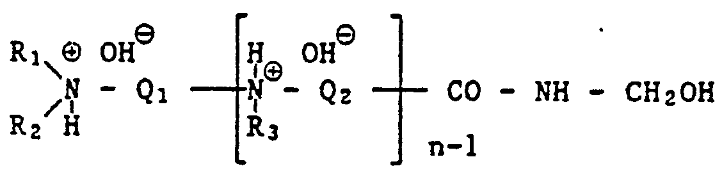

,

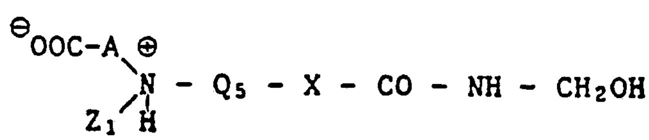

ou

$$H^{\oplus}\ ^{\ominus}Y_1—Q_5—CO—NH—CH_2OH$$

dans lesquelles A, $Q_1$, $Q_2$, $Q_5$, $R_1$, $R_2$, $R_3$, $R_4$, X, $Y_1^{\ominus}$, $Z_1$ et n ont les significations indiquées dans les revendications 2, 3 et 4.

8. Procédé selon la revendication 6, caractérisé en ce que l'on fait réagir les polysaccharides d'abord avec l'hydroxyméthylacrylamide comme composé hydroxyméthylé, et introduit ensuite la partie ionique par une réaction d'addition, sur la double liaison de l'intermédiare à modification acrylique, du composé de formule

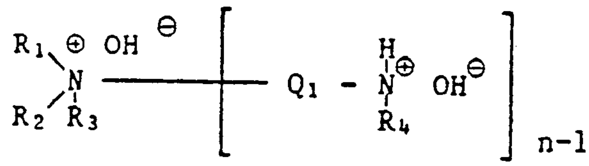

$$^{\ominus}OOC - A - NH_2 - Z$$

ou

$$Y^{\ominus} H^{\oplus}.$$

dans lesquelles A, $Q_1$, $R_1$, $R_2$, $R_3$, $R_4$, $Y_1^{\ominus}$ et $Z_1$ ont les significations indiquées dans les revendications 2, 3 et 4.

9. Utilisation des polysaccharides à modification ionique selon une des revendication 1 à 5, pour la purification des eaux usées et pour la séparation de mélanges de substances comportant une partie de composants ioniques.

10. Procédé de séparation chromatographique de mélanges de substances comportant une partie de composants ioniques, caractérisé en ce que l'on utilise comme phase stationnaire les polysaccharides à modification ionique selon une des revendications 1 à 5.

## Claims

1. A chemically modified polysaccharide which is obtainable from crosslinked dextrin, uncrosslinked or crosslinked dextran or uncrosslinked or crosslinked agarose, which contains α-glycosidic linkages and ionic components which are attached to the polysaccharide component through the grouping of the formula

$$—CO—NH—CH_2—O—$$

the carboxyl group being attached to the ionic component and the oxygen atom being attached to the polysaccharide component.

2. A polysaccharide according to claim 1, which is cationically modified and contains basic radicals of the formula

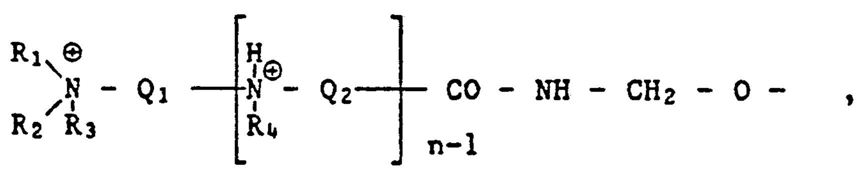

in which n is 1 or 2, each of $R_1$, $R_2$, $R_3$ and $R_4$ is hydrogen, $C_1$—$C_4$alkyl which is unsubstituted or substituted by hydroxy, nitrile, halogen or $C_1$—$C_4$alkoxy, unsubstituted or $C_1$—$C_4$alkyl-substituted cycloalkyl, benzyl or phenyl, each unsubstituted or substituted by nitro or halogen, or $R_1$ and $R_2$, together with the nitrogen atoms to which they are attached and any further hetero atoms, form a 5- or 6-membered heterocyclic ring, or $R_3$ and $R_4$, together with the grouping

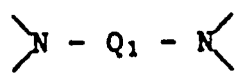

to which they are attached, and any further hetero atoms also form a 5- or 6-membered heterocyclic ring, and each of $Q_1$ and $Q_2$ is alkylene of 1 to 8 carbon atoms.

3. A polysaccharide according to claim 1, which is amphoteric and contains zwitterionic radicals of the formula

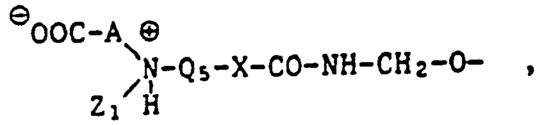

in which X is —O—, —S—,

—N—

$R_{11}$

or a direct bond, $R_{11}$ is hydrogen or alkyl of 1 to 4 carbon atoms, $Q_5$ is $C_1$—$C_8$alkylene or phenylene, each unsubstituted or substituted by $C_1$—$C_4$alkyl or phenyl, $Z_1$ is —B—$COO^{\ominus}$, alkyl of 1 to 4 carbon atoms or hydrogen, and A and B are each $C_1$—$C_8$alkylene which is unsubstituted or substituted by $C_1$—$C_4$alkyl, $C_1$—$C_4$alkoxy or phenyl.

4. A polysaccharide according to claim 1, which is anionically modified and contains acid radicals of the formula

$${}^{\ominus}Y_1—Q_5—CO—NH—CH_2—O—,$$

in which $Y_1^{\ominus}$ is carboxyl or the acid radical of a polybasic inorganic oxygen-containing acid, and $Q_5$ is as defined in claim 3.

5. A polysaccharide according to any one of claims 1 to 4, which has a degree of substitution of 0.1 to 0.8.

6. A process for the preparation of an anionically modified polysaccharide according to any one of claims 1 to 5, which comprises reacting the polysaccharide according to claim 1 with a compound that contains an N-methylolamide group.

7. A process according to claim 6, which comprises reacting the polysaccharide with a methylol compound of the formula

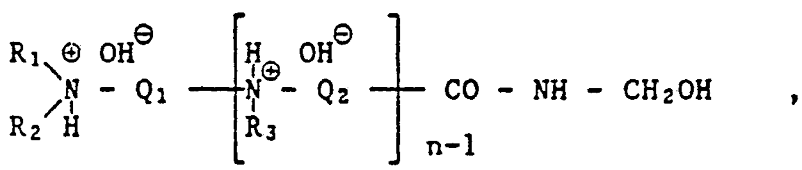

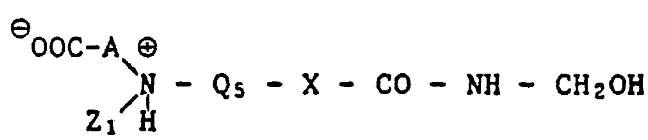

or

$$H^{\oplus}\ {}^{\ominus}Y_1—Q_5—CO—NH—CH_2OH$$

in which A, $Q_1$, $Q_2$, $Q_5$, $R_1$, $R_2$, $R_3$, $R_4$, X, $Y_1^{\ominus}$, $Z_1$ and n are as defined in claims 2, 3 and 4.

8. A process according to claim 6, which comprises reacting the polysaccharide first with methylolacrylamide, as methylol compound, and subsequently introducing the ionic component by addition reaction to the double bond of the acrylic-modified intermediate of the compound of the formula

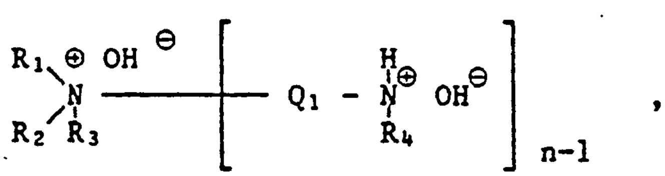

$${}^{\ominus}OOC - A - NH_2 - Z$$

or

$$Y_1^{\ominus}\ H^{\oplus}$$

in which A, $R_1$, $R_2$, $R_3$, $R_4$, $Q_1$, $Y_1^{\ominus}$ and $Z_1$ are as defined in claims 2, 3 and 4.

9. Use of an ionically modified polysaccharide according to any one of claims 1 to 5, for treating effluents and for separating mixtures of substances containing a proportion of ionic components.

10. A chromatographic method for separating mixtures of substances containing a proportion of ionic components, which comprises using, as stationary phase, an ionically modified polysaccharide according to any one of claims 1 to 5.